(19) Europäisches Patentamt
European Patent Office
Office européen des brevets

(11) EP 0 641 842 B1

(12) # EUROPÄISCHE PATENTSCHRIFT

(45) Veröffentlichungstag und Bekanntmachung des Hinweises auf die Patenterteilung:
**06.05.1998 Patentblatt 1998/19**

(51) Int Cl.[6]: **C09C 1/36**, C09C 1/00, C09C 3/06, C08K 9/02

(21) Anmeldenummer: **94112797.9**

(22) Anmeldetag: **17.08.1994**

(54) **Oberflächenmodifizierte Pigmente und deren Verwendung zur Vergilbungsinhibierung von pigmentierten Kunststoffen**

Surface-modified pigments and their use against yellowing of pigmented synthetic materials

Pigments modifiés en surface et leur utilisation contre le jaunissement des matières synthétiques pigmentées

(84) Benannte Vertragsstaaten:
**DE ES FR GB IT**

(30) Priorität: **02.09.1993 DE 4329613**

(43) Veröffentlichungstag der Anmeldung:
**08.03.1995 Patentblatt 1995/10**

(73) Patentinhaber: **MERCK PATENT GmbH**
**64293 Darmstadt (DE)**

(72) Erfinder: **Schraml-Marth, Matthias, Dr.**
**D-64673 Zwingenberg (DE)**

(56) Entgegenhaltungen:
**WO-A-93/19131** **DE-A- 2 245 959**
**GB-A- 1 046 722** **NL-A- 37 368**

- **DATABASE WPI Week 8311, Derwent Publications Ltd., London, GB; AN 83-26602K & JP-A-58 021 456 (KUBO Y.) 8. Februar 1983 & PATENT ABSTRACTS OF JAPAN vol. 7, no. 95 (C-163) 23. August 1983**
- **DATABASE WPI Week 8141, Derwent Publications Ltd., London, GB; AN 81-74575D & JP-A-56 106 965 (KUBO Y.) 25. August 1981**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).



Printed by Jouve, 75001 PARIS (FR)

## Beschreibung

Die Erfindung betrifft oberflächenmodifizierte Pigmente, basierend auf $TiO_2$-Pigmenten oder mit $TiO_2$ beschichteten plättchenförmigen Substraten, die mit einer Schicht bestehend aus Boraten der Erdkalimetalle und/oder Doppelboraten der Alkali- und/oder Erdalkalimetalle überzogen sind, sowie deren Verwendung zur Vergilbungsinhibierung von Kunststoffen sowie Kunststoffsystemen.

Technisch verwendbare Kunststoffe enthalten zur Verbesserung der Anwendungseigenschaften in der Regel eine Reihe von Zusatzstoffen, wie z. B. Weichmacher, Füllstoffe, Stabilisatoren und Alterungsschutzmittel, Gleit- und Trennmittel, Antistatika, Farbmittel sowie weitere Zusatzstoffe.

Dabei werden häufig insbesondere zwischen Farbmitteln einerseits und Stabilisatoren und Alterungsschutzmitteln andererseits unerwünschte Wechselwirkungen beobachtet, die vermutlich darin bestehen, daß die Stabilisator- und/oder Alterungsschutzmittelmoleküle zu der Oberfläche der Pigmentteilchen diffundieren und dort zu einer Vergilbungsreaktion führen, die vielfach auch im Dunkeln abläuft. Diese Vergilbungsreaktion führt insbesondere bei Pigmenten mit hellen Farbtönen zu unschönen Effekten und beeinträchtigt erheblich den ästhetischen Eindruck des Kunststoffsystems.

Die aus dem Stand der Technik bekannten Vorschläge zur Vermeidung der Vergilbungsreaktion führen zwar zu einer verbesserten Vergilbungsstabilität, jedoch gelingt es nicht, die Vergilbung von Kunststoffen vollständig zu unterdrücken. So wird z. B. in der EP 0 492 223 ein Verfahren beschrieben, bei der die Reaktivität des $TiO_2$ durch Silanisierung der Pigmentoberfläche herabgesetzt wird. Auch die Aufbringung weiterer Metalloxidschichten hat bei Verwendung gefärbter Oxidschichten den Nachteil die Farbeigenschaften des zugrunde liegenden mit $TiO_2$ beschichteten Pigments völlig zu verändern und zudem weist die dann oben liegende Metalloxidschicht häufig eine ebenso hohe Oberflächenreaktivität auf.

Auch die aus der EP 0 520 313 A2 bekannte Behandlung der $TiO_2$-Schicht mit einem Erdalkalititanat und anschließende Calcinierung führt nicht zu einer vollständigen Unterdrückung der Vergilbungsreaktion von pigmentierten Kunststoffen.

Die Aufgabe der vorliegenden Erfindung bestand daher in der Bereitstellung von oberflächenmodifizierten Pigmenten, auf der Basis von $TiO_2$, die bei der Einarbeitung in Kunststoffen auch über längere Zeit nicht zu einer Vergilbungsreaktion führen.

Überraschenderweise wurde nun gefunden, daß $TiO_2$-Pigmente oder mit $TiO_2$ beschichtete plättchenförmige Substrate, die mit Boraten der Erdalkalimetalle und/oder Doppelboraten der Alkali- und/oder Erdalkalimetalle beschichtet sind, die Vergilbungsreaktion in Kunststoffen in hohem Maße unterdrücken.

Gegenstand der Erfindung sind daher oberflächenmodifizierte Pigmente basierend auf $TiO_2$-Pigmenten oder mit $TiO_2$ beschichteten plättchenförmigen Substraten, dadurch gekennzeichnet, daß sie mit einer Schicht bestehend aus Boraten der Erdalkalimetalle und/oder Doppelboraten der Alkali- und/oder Erdalkalimetalle nachbeschichtet sind.

Gegenstand der Erfindung ist weiterhin ein Verfahren zur Herstellung der erfindungsgemäßen Pigmente, dadurch gekennzeichnet, daß zu der wäßrigen Lösung von Titandioxidpigmenten oder mit Titandioxid beschichteten plättchenförmigen Substraten gleichzeitig ein wasserlösliches Alkali- und/oder Erdalkalisalz und eine wasserlösliche Bor-Sauerstoff-Verbindung unter Bedingungen zugegeben werden, die zur Abscheidung des Borats bzw. Doppelborats führen, und daß man die nachbeschichteten Pigmente abtrennt, wäscht und ggf. trocknet oder glüht.

Gegenstand der Erfindung ist weiterhin die Verwendung der erfindungsgemäßen Pigmente zur Vergilbungsinhibierung in Kunststoffen.

Geeignete Substrate für die Nachbeschichtung sind einerseits opake, nichtplättchenförmige $TiO_2$-Pigmente, die in großem Maßstab als Weißpigment eingesetzt werden, andererseits auch transparente, nicht-plättchenförmige $TiO_2$-Typen mit einem Durchmesser unter 100 nm, die in verstärkten Maße in Kosmetik und Technik als UV-Absorber eingesetzt werden.

Erfindungsgemäße Pigmente basieren daher auch auf nicht-plättchenförmigen $TiO_2$-Pigmenten mit einem Durchmesser von 1 bis 10000 nm. Als Basissubstrat sind insbesondere plättchenförmige und vorzugsweise transparente oder semitransparente Substrate aus z. B. Schichtsilikaten, wie etwa Glimmer, Talkum, Kaolin, aus Glas, $SiO_2$ oder synthetischen Keramikflakes, synthetischen trägerfreien Plättchen oder anderen vergleichbaren Mineralien, geeignet.

Daneben kommen auch Metallplättchen, wie z. B. Aluminiumplättchen oder plättchenförmige Metalloxide, wie z. B. plättchenförmiges Eisenoxid oder Wismutoxichlorid in Betracht. Die plättchenförmigen Substrate haben typischerweise eine Dicke zwischen 0,1 und 5 $\mu$m und insbesondere zwischen 0,2 und 4,5 $\mu$m. Die Ausdehnung in den beiden anderen Bereichen beträgt üblicherweise zwischen 1 und 250 $\mu$m und insbesondere zwischen 2 und 200 $\mu$m.

Die Abscheidung von $TiO_2$ auf plättchenförmigen Substraten kann prinzipiell nach zwei Verfahren erfolgen, dem Sulfat-Verfahren, beschrieben in DE 14 67 468, und dem Chlorid-Verfahren, beschrieben in DE 20 09 566. In beiden Verfahren wird $TiO_2$ in Form der Modifikation Anatas auf dem plättchenförmigen Substrat abgeschieden. Ein Verfahren zur Abscheidung der Rutilmodifikation des $TiO_2$ ist in DE 22 14 545 aufgezeigt. Diese Modifikation besitzt im Gegensatz zur Anatasmodifikation einen höheren Brechungsindex, so daß mit Rutil beschichtete plättchenförmige Substrate einen

deutlich höheren Glanz aufweisen als Anatas-Tilandioxid-Glimmerpigmente und daher häufig bevorzugt werden.

Die hier angegebenen Verfahren zur Beschichtung des Substrats mit $TiO_2$ sind lediglich beispielhaft gemeint und sollen die Erfindung lediglich erläutern. Es können jedoch auch andere, hier nicht explizit beschriebene Verfahren (z. B. CVD-Verfahren usw.) angewendet werden. Erfolgt kein weiterer Verfahrensschritt, wird das Substrat nach der Beschichtung mit $TiO_2$ üblicherweise abgetrennt, gewaschen und ggf. getrocknet oder geglüht.

Die plättchenförmigen Substrate können auch zunächst mit einer oder mehreren anderen Metalloxidschichten aus z. B. Chromoxid, Eisenoxid, Zirkoniumoxid, Aluminiumoxid, Zinnoxid und/oder weiteren Metalloxiden beschichtet sein, ehe die Titandioxidschicht aufgebracht wird.

Da bei dem Verfahren keine hohen Scherkräfte benötigt werden, ist das Verfahren auch hervorragend zur Beschichtung von Perlglanzpigmenten geeignet.

Es können alle üblichen Perlglanzpigmente verwendet werden, z. B. Glimmerbeschichtungen mit farbigen oder farblosen Metalloxiden, wie $TiO_2$, $Fe_2O_3$, $SnO_2$, $Cr_2O_3$, ZnO und anderen Metalloxiden, allein oder in Mischung in einer einheitlichen Schicht oder in aufeinanderfolgenden Schichten. Diese Pigmente sind z. B. aus den deutschen Patenten und Patentanmeldungen 14 67 468, 19 59 998, 20 09 566, 22 14 545, 22 15 191, 22 44 298, 23 13 331, 25 22 572, 31 37 808, 31 37 809, 31 51 343, 31 51 354, 31 51 355, 32 11 502 und 32 35 017 bekannt und im Handel erhältlich, z. B. unter dem Warenzeichen Iriodin® von der Firma E. Merck, Darmstadt.

Bevorzugt werden als Basissubstrate Pigmente eingesetzt, welche unter der Titandioxidschicht nicht mehr als zwei und insbesondere nur eine oder keine weitere Metalloxidschicht aufweisen.

Zur Erzeugung der Erdalkali-/Alkali-Boratschicht wird zu einer wäßrigen Suspension von nicht-plättchenförmigen $TiO_2$ oder zu mit $TiO_2$-beschichteten plättchenförmigen Substraten ein wasserlösliches Erdalkalisalz bzw. ein Gemisch wasserlöslicher Erdalkali- und/oder Alkalisalze und eine wasserlösliche Bor-Sauerstoff-Verbindung zugegeben.

Geeignete Erdalkali- und Alkalisalze sind u. a. die Erdalkali-/Alkalichloride, weiter auch die Erdalkali-/Alkalinitrate und andere wasserlösliche Verbindungen. Als Bor-Sauerstoff-Verbindungen kommen in erster Linie borsaure Salze von Polysäuren zum Einsatz. Hier besonders die Alkaliborate, da diese im allgemeinen noch eine gute Wasserlöslichkeit zeigen. Im besonderen kommt Dinatriumtetraborat, $Na_2B_4O_7 \times 10\ H_2O$ (Borax), zum Einsatz.

Die Temperatur der Reaktionslösung ist nicht sehr kritisch und beträgt üblicherweise 20-80° C, jedoch empfiehlt es sich, die Fällung bei etwas höheren Temperaturen, vorzugsweise 40-80° C, vorzunehmen, da die Löslichkeit von Borax mit der Temperatur des Lösungsmittels zunimmt. Die Abscheidung wird typischerweise bei einem pH zwischen 3 und 12 vorgenommen.

Zur Durchführung der Beschichtung wird eine wäßrige Suspension von $TiO_2$ oder der mit $TiO_2$ beschichteten plättchenförmigen Substrate gleichzeitig mit einer wäßrigen Lösung der Alkali-/Erdalkalisalze und des Borates versetzt. Durch den schwach basischen Charakter des Borates kommt es ggf. zu einem leichten Anstieg des pH-Wertes, der durch Zusatz von verdünnten Säuren vorzugsweise Mineralsäuren, insbesondere HCl, leicht auf einem konstanten Niveau gehalten werden kann.

Die Alkali-/Erdalkalisalze und das Borat werden vorzugsweise in molaren Verhältnissen zugegeben, die der Stöchiometrie des auszufällenden Borates entsprechen, also z. B. 2 Mole $B_2O_3$ auf 1 Mol CaO bei der Fällung von $CaB_4O_7 \hat{=} CaO \times 2B_2O_3$ oder 3 Mole $B_2O_3$ auf 2 Mole CaO bei der Fällung von $Ca_2B_6O_{11} \hat{=} 2\ CaO \times 3B_2O_3$. Vorzugsweise beträgt das Molverhältnis Alkali-/Erdalkalisalz zu Borat zwischen 1:1 und 1:3.

Bei Einsatz von 1 mol Erdalkalichlorid und 1 mol Alkalitetraborat ergibt sich folgende Reaktionsgleichung, die jedoch nur beispielhaft zu verstehen ist und die Erfindung lediglich erläutern soll, ohne sie zu begrenzen:

$$CaCl_2 + Na_2[B_4O_5(OH)_4] \Rightarrow Ca[B_4O_5(OH)_4] + 2NaCl$$

Borate der Erdalkalimetalle bzw. Doppelborate aus Erdalkali- und/oder Alkalimetalle sind schwer bzw. unlöslich, so daß es zur Ausfällung oben genannter Verbindung auf dem Substrat kommt. Das so nachbeschichtete Pigment wird abgetrennt, gewaschen und ggf. getrocknet oder geglüht.

Beim Trocknen und speziell beim Calzinieren bei Temperaturen > 500° C, vorzugsweise 800 - 1000° C, der Boratbeschichteten Pigmente kommt es zu einem über viele Stufen ablaufenden Entwässerungsprozeß, der einerseits zur Ausbildung einer kristallinen, hoch lichtbrechenden Modifikation des $TiO_2$, zum anderen zur Bildung einer dünnen Beschichtung aus einem kristallinen Erdalkaliborat bzw. Erdalkali-/Alkalidoppelborat führt. Beispielhaft für diesen Prozeß sei folgende Gleichung gegeben:

$$Ca\,[B_4O_5\,(OH)_4] \xrightarrow{\Delta} CaB_4O_7 + 2H_2O \uparrow$$

Die Auffällung wird vorzugsweise so durchgeführt, daß nach dem Glühen eine relativ dünne Erdalkali-Alkaliboratschicht von wenigen Nanometern erhalten wird, da die optischen Eigenschaften des Substrates durch eine derart dünne Deckschicht nicht oder nur unwesentlich beeinflußt werden, was vielfach erwünscht ist. Der auf das erfindungsgemäße Pigment bezogene Massenanteil der Boratschicht beträgt vorzugsweise zwischen 0,1 und 20 Massenprozente und insbesondere zwischen 0,2 und 10 Massenprozente.

Kunststoffe bzw. Kunststoffsysteme, die mit den erfindungsgemäßen Pigmenten pigmentiert werden, zeigen im Gegensatz zu anderen Stabilisierungsmethoden, auch über längere Zeiträume keinerlei Vergilbung.

Die im folgenden angegebenen Beispiele sollen die Erfindung erläutern, ohne sie zu begrenzen:

<u>Beispiel 1:</u>

Eine Suspension von 10,7 kg Glimmer der Teilchengröße 5 - 15 µm wird in 280 l Wasser suspendiert und auf einen pH von 2,2 eingestellt. Dann wird mit einer Geschwindigkeit von etwa 16 l/h eine wäßrige, etwa 30 %ige $TiCl_4$-Lösung zugegeben, wobei der pH-Wert mit ca. 30 %iger NaOH auf 2,2 gehalten wird. Nach Erreichen einer silberweißen Interferenzfarbe wird die Dosierung abgebrochen und man rührt ½ h nach.
Nach Einstellen des pH-Wertes mit verdünnter NaOH auf pH = 6,7 werden gleichzeitig Lösungen aus 882 g $Na_2B_4O_7$ x 10 $H_2O$ in 15 l $H_2O$ und eine Lösung aus 350 g $CaCl_2$ x 2 $H_2O$ in 15 l $H_2O$ mit einer Geschwindigkeit von 15 l/h zudosiert. Das Reaktionsprodukt wird abfiltriert, getrocknet und bei 850° C geglüht.

<u>Beispiel 2:</u> - Vergleichsbeispiel (EP 0 520 313)

Analog Beispiel 1 wird zunächst ein silberweißes Perlglanzpigment hergestellt.
Nach Einstellen des pH mit verdünnter NaOH auf pH = 9 werden gleichzeitig Lösungen aus 410 g $CaCl_2$ x 2 $H_2O$ in 10 l $H_2O$ und 0,6 l $H_2O_2$ (30 %ig) in 9,4 l $H_2O$ mit einer Geschwindigkeit von 15 l/h zudosiert. Das Reaktionsprodukt wird abfiltriert, getrocknet und bei 850° C geglüht.

<u>Beispiel 3:</u> - Vergleichsbeispiel (EP 0 520 313)

Zunächst wird wie unter Beispiel 1 verfahren und ein silberweißes Perlglanzpigment hergesellt.
Es werden nun 0,63 kg $Na_2(C_2O_4)$ in fester Form eingetragen, wobei der pH von 2,2 auf 4,5 ansteigt. Anschließend werden 0,63 kg $CaCl_2$ x 2 $H_2O$ in 15 l $H_2O$ mit einer Geschwindigkeit von 15 l/h zudosiert, wobei der pH-Wert im wesentlichen konstant gehalten wird.
Das Reaktionsprodukt wird abfiltriert, getrocknet und bei 850° C geglüht.

<u>Beispiel 4:</u> - Vergleichsbeipiel

Es wird wie unter Beispiel 1 verfahren, und ein silberweißes Perlglanzpigment erzeugt.
Ohne Nachbeschichtung wird das Produkt abfiltriert, getrocknet und bei 850° C geglüht.

<u>Beispiel 5:</u>

Eine Suspension von 11 kg Glimmer der Teilchengröße 5 - 15 µm wird in 280 l Wasser suspendiert und auf einen pH von 2,2 eingestellt. Dann wird mit einer Geschwindigkeit von etwa 16 l/h eine wäßrige, etwa 30%ige $TiCl_4$-Lösung zugegeben, wobei der pH-Wert mit ca. 30%iger NaOH auf 2,2 gehalten wird. Nach Erreichen einer silberweißen Interferenzfarbe wird die Dosierung abgebrochen und man rührt ½ h nach.
Nach Einstellen des pH-Wertes mit verdünnter NaOH auf pH=6,7 werden gleichzeitig Lösungen aus 600 g $Na_2B_4O_7$ x 10 $H_2O$ in 15 l $H_2O$ und eine Lösung aus 235 g $CaCl_2$ x 2 $H_2O$ in 15 l $H_2O$ mit einer Geschwindigkeit von 15 l/h zudosiert.

Das Reaktionsprodukt wird abfiltriert, getrocknet und bei 850°C geglüht.

<u>Bestimmung der Oberflächenreaktivität</u>

Um nachzuweisen, inwieweit die beschichteten Pigmente in Kunststoffsystemen zu einer Vergilbung führen, wird folgende Testmethode eingesetzt:

150 mg Pigment werden eingewogen, mit 5 ml einer 1 %igen Lösung von Propylgallat in 2-Propanol versetzt, aufgeschüttelt und 15 min. stehen gelassen. Nach Überführen in eine spezielle Rundküvette läßt man 1 min absitzen und ermittelt die CIE-Lab-Werte mit einem Johne & Reilhofer-Meßgerät unter 45°/0°. Zur Ermittlung des Blindwertes werden 150 mg Pigment in 5 ml 2-Propanol suspendiert und wie oben vermessen. Die Meßwerte mit Propylgallat werden um die Blindwerte korrigiert.

Als Maßzahl für die Oberflächenreaktivität wird die Änderung des b-Wertes (= Verschiebung der Körperfarbe ins Gelbe) herangezogen. Ein großer positiver b-Wert bedeutet dabei eine starke Vergilbung. Ändert sich der b-Wert nicht, so wird keine Vergilbung beobachtet.

Tabelle 1

| | Beispiel 1 | Beispiel 2 | Beispiel 3 | Beispiel 4 | Beispiel 5 |
|---|---|---|---|---|---|
| Δb | -0,1 | 1,5 | 5,8 | 15,0 | 0,3 |

Die Meßergebnisse in Tabelle 1 verdeutlichen, daß durch die erfindungsgemäßen Pigmente eine Vergilbung in Kunststoffen völlig unterdrückt wird.

**Patentansprüche**

**1.** Oberflächenmodifizierte Pigmente, dadurch gekennzeichnet, daß Titandioxidpigmente oder mit Titandioxid beschichtete plättchenförmige Substrate mit einer Schicht bestehend aus Boraten der Erdalkalimetalle oder Doppelboraten der Alkali- und/oder Erdalkalimetalle nachbeschichtet sind.

**2.** Verfahren zur Herstellung der oberflächenmodifizierten Pigmente nach Anspruch 1, dadurch gekennzeichnet, daß zu der wäßrigen Lösung von Titandioxidpigmenten oder mit Titandioxid beschichteten plättchenförmigen Substraten gleichzeitig ein wasserlösliches Alkali- und/oder Erdalkalisalz und eine wasserlösliche Bor-Sauerstoff-Verbindung unter Bedingungen zugegeben werden, die zur Abscheidung des Borats bzw. Doppelborats führen, und daß man das nachbeschichtete Pigment abtrennt, wäscht und ggf. trocknet oder glüht.

**3.** Oberflächenmodifizierte Pigmente nach Anspruch 1, dadurch gekennzeichnet, daß der Anteil an Borat bezogen auf das Gesamtpigment 0,1 - 20 Massenprozent beträgt.

**4.** Oberflächenmodifizierte Pigmente nach Anspruch 1, dadurch gekennzeichnet, daß das plättchenförmige Substrat Glimmer ist.

**5.** Oberflächenmodifizierte Pigmente nach Anspruch 1, dadurch gekennzeichnet, daß die plättchenförmigen Substrate $SiO_2$-Flakes sind.

**6.** Oberflächenmodifizierte Pigmente nach Anspruch 1, dadurch gekennzeichnet, daß das plättchenförmige Substrat ein Perlglanzpigment ist.

**7.** Verfahren nach Anspruch 2, dadurch gekennzeichnet, daß die wasserlösliche Bor-Sauerstoff-Verbindung ein Salz einer Polyborsäure ist.

**8.** Verfahren nach Anspruch 2, dadurch gekennzeichnet, daß die Bor-Sauerstoff-Verbindung Dinatriumtetraborat ist.

**9.** Verfahren nach Anspruch 2, dadurch gekennzeichnet, daß man die Alkali- und Erdalkalisalze und die Bor-Sauerstoff-Verbindung in molaren Mengen einsetzt.

**10.** Verfahren nach Anspruch 2, dadurch gekennzeichnet, daß man die Nachbeschichtung bei Temperaturen im Bereich von 20 - 80° C durchführt.

**11.** Kunststoffsystem enthaltend oberflächenmodifizierte Pigmente nach Anspruch 1.

**12.** Verwendung von oberflächenmodifizierten Pigmenten nach Anspruch 1 zur Vergilbungsinhibierung von Kunststoffen.

**Claims**

**1.** Surface-modified pigments, characterized in that titanium dioxide pigments or titanium dioxide-coated plateletlike substrates have been aftercoated with a layer consisting of borates of the alkaline earth metals or double borates

of the alkali and/or alkaline earth metals.

2. Process for preparing the surface-modified pigments of Claim 1, characterized in that the aqueous solution of titanium dioxide pigments or of titanium dioxide-coated plateletlike substrates has added to it, at one and the same time, a water-soluble alkali and/or alkaline earth metal salt and a water-soluble boron-oxygen compound under conditions which lead to deposition of the borate or double borate and in that the aftercoated pigment is separated off, washed and optionally dried or calcined.

3. Surface-modified pigments according to Claim 1, characterized in that the proportion of borate, based on the total pigment, is 0.1-20 mass per cent.

4. Surface-modified pigments according to Claim 1, characterized in that the plateletlike substrate is mica.

5. Surface-modified pigments according to Claim 1, characterized in that the plateletlike substrates are $SiO_2$ flakes.

6. Surface-modified pigments according to Claim 1, characterized in that the plateletlike substrate is a pearl lustre pigment.

7. Process according to Claim 2, characterized in that the water-soluble boron-oxygen compound is a salt of a polyboric acid.

8. Process according to Claim 2, characterized in that the boron-oxygen compound is disodium tetraborate.

9. Process according to Claim 2, characterized in that the alkali and alkali earth metal salts and the boron-oxygen compound are used in molar amounts.

10. Process according to Claim 2, characterized in that the aftercoating is carried out at temperatures within the range 20-80°C.

11. Plastics system containing surface-modified pigments according to Claim 1.

12. Use of surface-modified pigments according to Claim 1 for yellowness inhibition in plastics.

**Revendications**

1. Pigments modifiés en surface, caractérisés en ce que, sur des supports de substrats en paillettes revêtus de dioxyde de titane pigmentaire ou de dioxyde de titane on applique une couche consistant en borate de métaux alcalino-terreux ou en borates doubles de métaux alcalins et/ou alcalino-terreux.

2. Procédé de préparation des pigments modifiés en surface selon revendication 1, caractérisé en ce que, à la solution aqueuse des supports en substrats en paillettes revêtus de dioxyde de titane pigmentaire ou de dioxyde de titane, on ajoute simultanément un sel alcalin et/ou alcalino-terreux soluble dans l'eau et un composé de bore-oxygène soluble dans l'eau dans des conditions qui conduisent à la déposition du borate ou du borate double, après quoi on sépare le pigment portant la deuxième couche, on le lave et le cas échéant, on le sèche ou on le calcine.

3. Pigments modifiés en surface selon revendication 1, caractérisés en ce que la proportion du borate représente de 0,1 à 20 % en poids du pigment total.

4. Pigments modifiés en surface selon revendication 1, caractérisé en ce que le support en substrats en paillettes est du mica.

5. Pigments modifiés en surface selon revendication 1, caractérisés en ce que le support en substrats en paillettes consiste en écailles de $SiO_2$.

6. Pigments modifiés en surface selon revendication 1, caractérisés en ce que le support en substrats en paillettes est un pigment nacré.

**7.** Procédé selon revendication 2, caractérisé en ce que le composé de bore-oxygène soluble dans l'eau est un sel d'un acide polyborique.

**8.** Procédé selon revendication 2, caractérisé en ce que le composé de bore-oxygène est le tétraborate disodique.

**9.** Procédé selon revendication 2, caractérisé en ce que l'on met en oeuvre les sels alcalins et alcalino-terreux et le composé de bore-oxygène en quantités molaires.

**10.** Procédé selon revendication 2, caractérisé en ce que l'on applique le nouveau revêtement à des températures dans l'intervalle de 20 à 80°C.

**11.** Composition de résine synthétique contenant un pigment modifié en surface selon revendication 1.

**12.** Utilisation des pigments modifiés en surface selon revendication 1 pour inhiber le jaunissement des résines synthétiques.